# EUROPEAN PATENT SPECIFICATION

(11) **EP 1 533 222 B1**
(45) Date of publication and mention of the grant of the patent: **23.08.2006**
(21) Application number: 04105976.7
(22) Date of filing: 22.11.2004
(51) Int. Cl.: B63B 21/04, F16G 11/14

(54) **Shock-absorbing device having an extremely simple structure, for the mooring of boats**
Stossdämpfervorrichtung mit einfacher Struktur zum Vertäuen von Booten
Dispositif amortisseur de choc avec une structure extrêmement simple pour l'amarrage de bateaux

(30) Priority: 21.11.2003 IT MI20030543 U
(43) Date of publication of application: 25.05.2005
(73) Proprietor: Pedruzzi, Carlo, 24128 Bergamo (IT)
(72) Inventor: Pedruzzi, Carlo, 24128 Bergamo (IT)
(74) Representative: Faggioni, Carlo Maria

(56) References cited:
- CH-A- 428 330
- FR-A- 893 564
- US-A- 4 109 603

## Description

The present invention relates to a shock-absorbing device, specifically for the mooring of boats, having an extremely simple structure.

Various types of shock-absorbing devices are known to be used for the mooring of boats in the proximity of piers, with the function of lessening and dampening the jerks produced by the surf.

One type of these shock-absorbing devices simply consists of a steel spring arranged along the rope or the chain which connects the boat to the pier. This type of device has the disadvantage of emitting bothersome squeaks. Furthermore, an excessive stress may cause yielding or even breakage of the spring. To avoid that, an additional or by-pass chain is provided which, however, when stepping in, cancels the shock-absorbing effect.

A similar device, where, however, the elastic component is not metallic, is shown in CH 428.330. In this case the end-of-stroke of the shock-absorber is still determined by a metal chain and, besides, the assembly is rather complex and expensive.

Another type of shock-absorbing device substantially consists of a shock-absorbing assembly made of one or more rigid and strong elements between which an elastically deformable member is arranged. The assembling between the two opposite rigid members is accomplished so that the pulling load applied to the two opposite ends of the shock-absorbing assembly is transformed into a compression load of the elastically deformable member. A device of this type for example is illustrated in EP 900.723. This type of device has the disadvantage of having a complex structure, for the very purpose of transforming the traction load into a compression load on the elastic component.

It is an object of the present invention to provide a shock-absorbing device, specifically for the mooring of boats, which has an extremely simple structure, so as to have limited bulk, be reliable, scarcely subject to wear or environmental elements and of such a configuration to be manufactured at an extremely reduced cost.

It is furthermore intended to provide a silent-operation shock-absorbing element which does not require the use of a safety or by-pass chain.

Such objects are achieved through a shock-absorbing device as described in its essential features in the attached main claim.

Other inventive aspects of the invention are described in the dependent claims.

Further features and advantages of the device according to the invention will in any case be more evident from the following detailed description of a preferred embodiment of the same, given by way of example and illustrated in the accompanying drawings, wherein:
figure 1 is a plan top view of the anular body of the shock-absorbing device according to the invention;
figure 2 is an elevation front view of the body of fig. 1;
figure 3 is a partial cross-section view taken along line III-III of figure 1;
figure 4 and figure 5 show the operation of the device of the invention not stressed and completely extended, respectively.

With reference to the cited figures, the shock-absorbing device according to the invention, globally indicated by reference number 1, comprises an anular body 2, of an elastically extensible material, which has, in two areas diametrically opposite to each other, two preferably coaxial through-holes 3a, 3b, which may be crossed by a mooring rope 4.

The anular body 2 may be variously shaped according to requirements, for example it can have an octagonal, hexagonal or substantially circular layout. Also the section thereof can be variously shaped, for example so as to be ovoidal, polygonal, etc.

The anular body 2 is preferably made of a resin having a high elastic limit and is preferably thicker in the areas crossed by holes 3a, 3b.

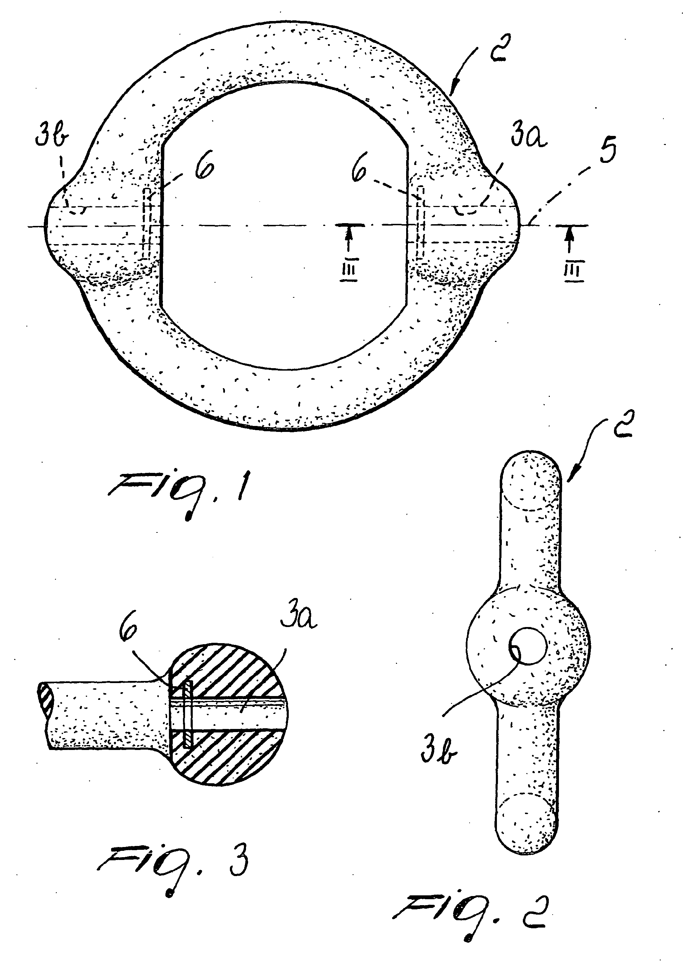

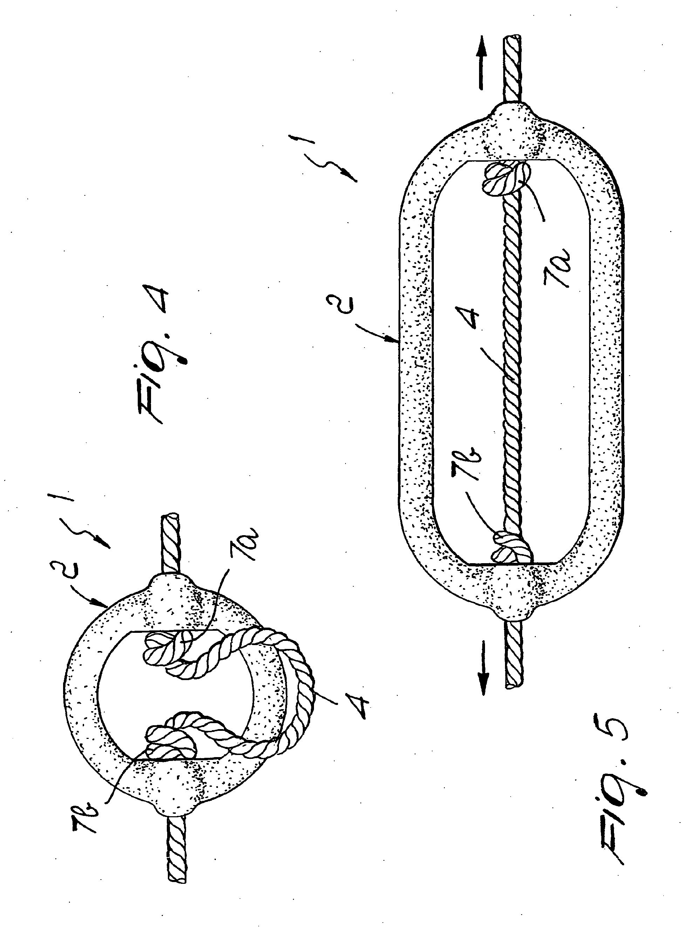

According to a preferred embodiment of the invention, strengthening means are provided in correspondence of the mouth of the holes 3a, 3b on the side facing the inside of anular body 2. Such strengthening means preferably consist, for each of holes 3a, 3b, of a washer 6 which is embedded in the anular body 2, in the proximity of the inner side of the corresponding hole 3a, 3b, in a coaxial position with the corresponding hole, as shown in particular in figure 3.

During use, the anular body 2 is inserted along a mooring rope, specifically the portion of the mooring rope 4 extending between the two holes 3a, 3b is fixed, in a loose condition, between the two holes 3a, 3b in the direction of traction along axis 5. In particular, the mooring rope 4 may be fixed, in a loose condition, between the two holes 3a, 3b simply by forming two knots 7a and 7b, spaced apart by a longer distance than the distance existing between holes 3a, 3b, when the anular body 2 is in an unloaded condition i.e. not subject to forces, providing for holes 3a, 3b, a diameter only slightly larger than the diameter of the mooring rope 4.

Alternatively, separated fixing means can be provided, for example clamps or bushes which may be clamped onto rope 4, which produce the same effect of knots 7a, 7b.

The use of the shock-absorbing device according to the invention is the following.

The mooring rope 4 is inserted through either of the two holes 3a, 3b, for example into hole 3a, of the anular body 2. Along the mooring rope 4 two knots 7a, 7b are hence made at a longer distance than the inner diameter of anular body 2, i.e. at the distance existing between the holes 3a, 3b with the anular body 2 in a completely unloaded condition. Preferably, the distance between these two knots 7a, 7b of the mooring rope 4 is equal to twice the distance between the holes 3a, 3b with the anular body 2 unloaded. Alternatively, instead of making knots, a pair of fixing means is applied at the suitable distance. At this point, insertion of the mooring rope 4 is completed through the other hole 3b, thereby completing the shock-absorbing device according to the invention.

An end of the mooring rope 4 is hence attached to the boat, while the other end is attached to the mooring spot on the pier. The boat movement, particularly during surf, applies to the mooring rope 4 a pulling force which causes elastic deformation of the anular body 2. The anular body 2, with its elastic deformability, effectively imparts a dampening action on the stress transmitted along the mooring rope 4. When the stress becomes excessive, the mooring rope 4 prevents excessive deformation of the anular body 2, thereby preventing breakage thereof.

In these conditions, the mooring rope 4 effectively operates as a safety or by-pass chain, without, however, causing strong jerks, due to a residual elasticity of the mooring rope itself. It is to be noted that this by-pass effect may be adjusted by suitably varying the distance between knots 7a, 7b made along mooring rope 4.

In practice, it has been established how the shock-absorbing device according to the invention fully performs the set task in that, despite an extremely simple structure, it nevertheless brilliantly performs the task of dampening the stresses transmitted along the mooring rope, silently and without requiring the associated use of a safety or by-pass chain.

A further advantage of the device according to the invention is that no maintenance is required.

In practice, any material can be employed, provided it is compatible with its specific use, as well as any size, according to requirements and the state of the art.

## Claims

1. Shock-absorbing device, particularly for the mooring of boats, of the type comprising a dampening elastic body positioned along a mooring rope, **characterised in that** said elastic body consists of an anular body, made of an elastically extendable material, having, in two positions substantially opposite to each other, two through-holes which can be crossed by said mooring rope, the portion of the mooring rope extending between said two holes being lockable, in a loose condition, between said two holes in the traction direction.

2. Device according to claim 1), **characterised in that** said anular body is made of a high-elastic-limit synthetic resin.

3. Device according to claim 1), **characterised in that** it further comprises strengthening means of the inner mouth of said holes of the anular body.

4. Device according to claim 3), wherein said strengthening means comprise, for each of said two holes, a metal washer embedded in said anular body in a coaxial position with the associated hole.

5. Device according to one or more of the previous claims, wherein said anular body is thicker in the area crossed by said holes.

6. Device, according to one or more of the previous claims, wherein said holes have a diameter slightly larger than the diameter of said mooring rope.

7. Device as in any one of the previous claims, wherein said rope is lockable between said holes by blocking means larger than the diameter of said holes of the anular body.

8. Device according to claim 7), wherein said blocking means are knots on the mooring rope.

9. Device according to claim 8), wherein said two knots, along the portion of said mooring rope extending between said two holes, are spaced apart by a larger distance than the distance existing between said two holes when said anular body is unstressed.

10. Device according to claim 9), wherein the distance between said two knots is substantially equal to twice the distance existing between said two holes when said anular body is unstressed.

## Patentansprüche

1. Stoßabsorbierende Vorrichtung, insbesondere für das Festmachen von Booten, der Bauart, die einen dämpfenden elastischen Körper aufweist, der entlang einer Halteleine angeordnet ist, **dadurch gekennzeichnet, daß** der genannte elastische Körper aus einem ringförmigen Körper besteht, der aus einem elastischen, dehnbaren Material hergestellt ist, und der an zwei im wesentlichen einander gegenüberliegenden Positionen zwei durchgehende Öffnungen aufweist, durch die die genannte Halteleine hindurchgehen kann, wobei der Abschnitt der Halteleine, der sich zwischen den beiden genannten Öffnungen erstreckt, in einem losen Zustand zwischen den beiden genannten Öffnungen in der Zugrichtung blockiert werden kann.

2. Vorrichtung nach Anspruch 1, **dadurch gekennzeichnet, daß** der genannte ringförmige Körper aus einem synthetischen Harz mit einer hohen Elastizitätsgrenze hergestellt ist.

3. Vorrichtung nach Anspruch 1, **dadurch gekennzeichnet, daß** sie weiterhin Verstärkungsmittel für die innere Mündung der genannten Öffnungen des ringförmigen Körpers aufweist.

4. Vorrichtung nach Anspruch 3, **dadurch gekennzeichnet, daß** die genannten Verstärkungsmittel für jede der beiden genannten Öffnungen eine metallische Scheibe aufweisen, die in dem genannten ringförmigen Körper in einer koaxialen Position in Bezug auf die zugehörige Öffnung eingebettet ist.

5. Vorrichtung nach einem der vorangehenden Ansprüche, **dadurch gekennzeichnet, daß** der genannte ringförmige Körper in dem Bereich, durch den die beiden genannten Öffnungen hindurchgehen, dicker ist.

6. Vorrichtung nach einem oder mehreren der vorangehenden Ansprüche, **dadurch gekennzeichnet, daß** die genannten Öffnungen einen Durchmesser aufweisen, der geringfügig größer ist als der Durchmesser der genannten Halteleine.

7. Vorrichtung nach einem der vorangehenden Ansprüche, **dadurch gekennzeichnet, daß** die genannte Leine zwischen den genannten Öffnungen durch ein Blockierungsmittel blockiert werden kann welches größer ist als der Durchmesser der genannten Öffnungen des ringförmigen Körpers.

8. Vorrichtung nach Anspruch 7, **dadurch gekennzeichnet, daß** das genannte Blockierungsmittel aus Knoten auf der Halteleine besteht.

9. Vorrichtung nach Anspruch 8, **dadurch gekennzeichnet daß** die beiden genannten Knoten entlang des Abschnitts der genannten Halteleine, der sich zwischen den beiden genannten Öffnungen erstreckt, um einen größeren Abstand voneinander entfernt sind als der Abstand, der zwischen den beiden genannten Öffnungen besteht, wenn der genannte ringförmige Körper nicht unter Spannung steht.

10. Vorrichtung nach Anspruch 9, **dadurch gekennzeichnet, daß** der Abstand zwischen den beiden genannten Knoten im wesentlichen gleich der doppelten Entfernung ist, die zwischen den beiden genannten Öffnungen besteht, wenn der genannte ringförmige Körper nicht unter Spannung steht,

## Revendications

1. Dispositif d'absorption de chocs, en particulier pour l'amarrage de navires, du type comportant un corps élastique amortisseur positionné le long d'une amarre, **caractérisé en ce que** ledit corps élastique consiste en un corps annulaire, formé d'une matière extensible élastiquement, ayant, en deux positions sensiblement opposées l'une à l'autre, deux trous traversants dans lesquels ladite amarre peut passer, la partie de l'amarre s'étendant entre lesdits deux trous pouvant être bloquée, dans un état libre, entre lesdits deux trous dans la direction de la traction.

2. Dispositif selon la revendication 1, **caractérisé en ce que** ledit corps annulaire est formé d'une résine synthétique à haute limite élastique.

3. Dispositif selon la revendication 1, **caractérisé en ce qu'**il comporte en outre des moyens de renfort de l'embouchure intérieure desdits trous du corps annulaire.

4. Dispositif selon la revendication 3, dans lequel lesdits moyens de renfort comprennent, pour chacun desdits deux trous, une rondelle métallique encastrée dans ledit corps annulaire dans une position coaxiale avec le trou associé.

5. Dispositif selon une ou plusieurs des revendications précédentes, dans lequel ledit corps annulaire est plus épais dans la zone traversée par lesdits trous.

6. Dispositif selon une ou plusieurs des revendications précédentes, 1 dans lequel lesdits trous ont un diamètre légèrement supérieur au diamètre de ladite amarre.

7. Dispositif selon l'une quelconque des revendications précédentes, dans lequel ladite amarre peut être bloquée entre lesdits trous par des moyens de blocage plus grands que le diamètre desdits trous du corps annulaire.

8. Dispositif selon la revendication 7, dans lequel lesdits moyens: de blocage sont des noeuds situés sur l'amarre.

9. Dispositif selon la revendication 8, dans lequel lesdits deux noeuds, le long du tronçon de ladite amarre s'étendant entre lesdits deux trous, sont espacés d'une distance supérieure à la distance existant entre lesdits deux trous lorsque ledit corps annulaire n'est soumis à aucune contrainte.

10. Dispositif selon la revendication 9, dans lequel la distance entre lesdits deux noeuds est sensiblement égale au double de la distance existant entre lesdits deux trous lorsque ledit corps annulaire n'est soumis à aucune contrainte.
